# FASCICULE DE BREVET EUROPEEN

(11) **EP 2 185 389 B1**
(45) Date de publication et mention de la délivrance du brevet: **15.02.2012**
(21) Numéro de dépôt: 08851520.0
(22) Date de dépôt: 10.09.2008
(51) Int. Cl.: B60S 3/04, B60S 3/06, A46B 17/06

(54) **DISPOSITIF ET PROCEDE DE NETTOYAGE DES BROSSES D'UN PORTIQUE DE LAVAGE DE VEHICULE**
VORRICHTUNG UND VERFAHREN ZUR REINIGUNG DER BÜRSTEN EINES FAHRZEUGWASCHGERÜSTS
DEVICE AND METHOD FOR CLEANING THE BRUSHES OF A VEHICLE WASH GANTRY

(30) Priorité: 10.09.2007 EP 07360039
(43) Date de publication de la demande: 19.05.2010
(73) Titulaire: Financière Clairac, 75116 Paris (FR)
(72) Inventeur: VILLARD, Julien, F-67240 Oberhoffen-sur-Moder (FR); STACKLER, Christian, F-67450 Mundolsheim (FR)
(74) Mandataire: Littolff, Denis
(86) Numéro de dépôt international: PCT/FR2008/001269
(87) Numéro de publication internationale: WO 2009/066042

(56) Documents cités:
- DE-A1- 10 240 689
- DE-A1-102005 028 116
- DE-A1-102005 028 116
- JP-A- 2 193 745
- JP-A- 6 206 522
- JP-A- 9 076 885
- JP-A- 10 217 920
- JP-A- 2004 189 087
- JP-U- 1 081 162
- US-A1- 2002 162 581
- US-A1- 2002 162 581

## Description

La présente invention a trait à titre principal à un dispositif de nettoyage des brosses d'un portique de lavage de véhicules. Elle concerne cependant également un procédé de nettoyage mis en oeuvre sur la base de ce dispositif.

Contrairement au nettoyage à haute pression à l'aide de buses ou de lances de lavage pulvérisant un jet de liquide à distance sur les carrosseries de véhicules, les portiques à brosses (par exemple à rouleaux rotatifs) agissent par frottement impliquant un contact mécanique dont l'un des inconvénients bien connus est la génération à terme de rayures ou d'une perte de brillance sur la carrosserie.

Ainsi, il survient avec le temps une forme d'érosion liée au contact répétitif qui se produit pendant l'action de la brosse, et qui affecte l'ensemble de la carrosserie. Par ailleurs, pendant la phase d'interaction entre la ou les brosses et la carrosserie, des rayures peuvent être localement provoquées par l'existence de salissures abrasives présentes sur la carrosserie, momentanément entraînées par une brosse. Enfin, de telles rayures peuvent également être provoquées par des salissures présentes non pas sur la carrosserie mais sur une brosse, soit dès avant le début de l'opération de frottement, soit prélevées ailleurs sur la carrosserie.

Cette dernière hypothèse est malheureusement loin d'être improbable dans la mesure où les rouleaux / brosses, sollicités de manière répétitive pour procéder au lavage de véhicules, se chargent tout à fait normalement de salissures / particules au cours du lavage d'un véhicule, et peuvent dès lors provoquer des dégâts sur la carrosserie de véhicules utilisant ultérieurement le même dispositif de lavage.

L'invention vise à supprimer ce problème, en éliminant toute salissure susceptible d'affecter les rouleaux ou brosses avant le début du lavage d'un véhicule. Dans cette perspective, il est possible de réaliser un nettoyage des brosses au tout début de la phase de lavage programmée par le client ou en fin de lavage de la voiture précédente, par exemple juste avant l'essorage des brosses. Alternativement, cela peut être réalisé en fin d'une phase de lavage, avant ou au cours de la phase de séchage du programme de lavage du véhicule précédent.

En tout état de cause, le dispositif de nettoyage de l'invention comporte des buses projetant un fluide sous pression sur les brosses du portique de lavage. Une telle caractéristique est déjà mentionnée dans les documents JP 06 206522A et JP 02 193745A.

En d'autres termes, outre l'existence possible de buses pour le nettoyage à haute pression de véhicules, qui peuvent coexister avec des brosses opérant par contact mécanique direct avec la carrosserie du véhicule, la solution met en oeuvre un fluide sous pression non pas destiné au lavage du véhicule, mais au portique de lavage, et plus particulièrement aux brosses qui l'équipent.

Selon la présente invention, la pression du fluide projeté est comprise entre 15 et 75 bars et, le dispositif comporte des moyens d'orientation des buses relativement aux brosses du portique de lavage. Dans certaines stations de lavage, selon la gamme proposée par le constructeur, la pression utilisée peut être proche de 15 bars alors que des modèles de station plus performantes proposent des pressions de fonctionnement proche de la limite supérieure de l'intervalle précité.

Les moyens d'orientation permettent un réglage en vue de faire varier la position relative des buses et des brosses. Le but est d'orienter, avant le nettoyage des brosses, les buses dans une direction prédéterminée favorable à un nettoyage correct de celles-ci, par exemple en les orientant tangentiellement aux rouleaux rotatifs, et/ou de permettre une variation de leur orientation au cours du nettoyage des brosses.

Selon une possibilité, les buses sont montées sur le portique de lavage de véhicules.

Dans cette hypothèse, dans le cas de systèmes mixtes, c'est-à-dire de portiques intégrant à la fois des rouleaux et des buses à haute pression pour le lavage des véhicules, le nettoyage des brosses peut éventuellement être réalisé par les mêmes buses. Les deux fonctions dévolues aux buses sont alors mises en oeuvre séquentiellement.

Selon une variante, les buses peuvent être montées sur un portique distinct du portique de lavage de véhicules. Dans cette hypothèse, le système de l'invention est donc monté sur un portique spécifique, prévu pour interagir avec le portique de lavage des véhicules par exemple lorsque celui-ci est stationné à l'arrêt entre deux phases de lavage.

Plus précisément, quelle que soit l'hypothèse envisagée, les buses sont intégrées à au moins une rampe, laquelle peut également être prévue orientable.

Dans ce cas, outre l'orientabilité propre à chaque buse, il est possible de procéder à un préréglage en disposant la ou les rampes de manière adéquate par rapport aux brosses et/ou aux rouleaux. Les deux réglages d'orientation, respectivement des rampes et des buses, optimisent l'opération de nettoyage des brosses.

Selon l'invention, le dispositif de nettoyage comporte une unité de gestion apte à déclencher un cycle de lavage des brosses sur la base d'une commande automatisée, celle-ci étant gérée par l'unité de gestion sur la base d'événements prédéterminés mémorisés, qui peuvent par exemple être la fin ou le début d'un cycle de lavage de véhicule.

Les brosses sont des rouleaux animés d'un mouvement de rotation, comme cela se trouve fréquemment dans les stations de lavage de véhicule.

Le dispositif de l'invention peut au surplus comporter des moyens d'action mécaniques sur les brosses en vue d'en détacher les salissures, moyens qui s'ajoutent à la pression des jets de fluide issus des buses du dispositif et travaillent par contacts et chocs mécaniques.

Lesdits moyens peuvent alors par exemple consister pour chaque brosse en un peigne à longrine d'allure parallèle à la brosse et dont les dents souples ou rigides sont aptes à interférer avec la brosse en mouvement.

Selon une configuration possible, ledit dispositif peut en outre comporter des moyens de carterisation des brosses en cours de nettoyage. Une telle possibilité vise à protéger les alentours de toute projection.

Selon une possibilité de configuration, les moyens de carterisation sont mobiles entre deux positions stables, une position inactive et une position active de protection contre les projections au moment du lavage des brosses. Ils ne sont donc pas opérationnels en permanence, mais leur mise en oeuvre dépend soit de la volonté de l'utilisateur, soit d'événements gérés par l'unité de traitement.

Ainsi, si le portique de lavage prend la forme de deux brosses latérales d'allure verticale associées à une brosse supérieure d'allure horizontale, les moyens de carterisation peuvent par exemple comporter pour chaque brosse verticale un carrossage latéral externe au contact duquel se rétracte en position inactive et à partir duquel se déploie en position active au moins un pan additionnel de carterisation s'étendant au moins partiellement autour de chaque brosse verticale.

Le carrossage latéral externe peut consister en une tôle formant une portion de cylindre d'axe sensiblement égal à l'axe de rotation des rouleaux constituant les brosses, dans laquelle vient coulisser transversalement une portion de cylindre de même rayon de courbure constituant le pan additionnel.

En d'autres termes, le carter mis en oeuvre peut par exemple prendre la forme de demi-cylindres dont l'un coulisse sur l'autre afin d'enfermer la ou les brosses pendant leur nettoyage, ledit carter pouvant se rétracter pendant le lavage du véhicule.

A titre de moyens mécaniques additionnels d'enlèvement des salissures sur les brosses, le pan additionnel peut comporter, s'étendant sensiblement radialement en direction de la brosse, un peigne ou au moins une lamelle, cette dernière ou les dents du peigne pénétrant dans le volume occupé par le rouleau et que ce dernier heurte lorsqu'il est en cours de rotation.

Les dents du peigne ou les lamelles peuvent être prévues en matériau synthétique souple ou rigide, heurtant les brins des brosses pour les débarrasser des saletés éventuelles à l'appui de l'action des jets sous pression.

Selon une configuration possible, les moyens de carterisation de la brosse supérieure horizontale consistent en un volet, auquel un déplacement entre une position ouverte et fermée peut être conféré.

Le déplacement des moyens de carterisation est piloté par l'unité de traitement mentionné auparavant, laquelle émet des commandes de déploiement/rétractation qui dépendent d'événements préprogrammés, y compris en réponse à une commande manuelle.

Jusqu'alors, il a été fait état d'un dispositif de nettoyage projetant un fluide sous pression. Ainsi, selon une possibilité, ce fluide peut être de l'air sous pression. Alternativement, il peut s'agir d'un liquide, comportant ou non des moyens chimiques de nettoyage des brosses. En d'autres termes, les salissures susceptibles de rayer les carrosseries des véhicules peuvent être séparées des brosses mécaniquement, sous l'effet de la pression du liquide, voire d'éventuelles forces centrifuges dans le cas de rouleaux rotatifs, et / ou chimiquement par action d'un produit adapté contenu dans le liquide projeté, par exemple du type détergent.

Le liquide projeté peut, selon une possibilité, être chaud. Cette possibilité conduit à supprimer tout risque de projection de particules gelées lors de lavages opérés à une température proche de 0°. Des particules gelées pourraient alors conduire aux mêmes inconvénients que les salissures sur les carrosseries.

Comme mentionné auparavant, l'invention concerne également un procédé de nettoyage basé sur un dispositif tel que décrit ci-dessus. A la base, ce procédé consiste à pulvériser un fluide sous pression sur les brosses pour les nettoyer.

Le nettoyage des brosses mis en oeuvre selon le procédé de l'invention dépend bien entendu de la configuration du portique et des brosses qui y sont incluses. En l'espèce, il s'agit de rouleaux rotatifs, et les brosses sont mises en rotation pour leur nettoyage. Ce mouvement conduit à optimiser l'opération, en suscitant la mise en oeuvre de forces qui s'additionnent à la pression du fluide.

Selon l'invention, au cours d'un cycle de nettoyage des brosses, celles-ci sont mises en rotation alternativement dans un sens et en sens inverse, de sorte que le flux de fluide sous pression s'applique aux rouleaux suivant deux angles d'incidences distincts, ce qui augmente l'efficacité de leur nettoyage.

Selon l'invention, la durée de la rotation dans chaque sens est comprise entre 3 s et 10 s. Il peut par exemple s'agir de 5 s dans les deux sens. Dans ce cas, les rouleaux sont immobilisés pendant une durée prédéterminée entre chaque changement de sens de rotation, la pulvérisation s'appliquant dès lors aussi pendant la phase d'immobilisme, conduisant encore à un autre effet de nettoyage.

Par ailleurs, toujours pour varier les effets et par suite l'efficacité du lavage, il est prévu selon l'invention qu'à certains moments d'un cycle de nettoyage des brosses, les rouleaux sont entrainés en rotation pendant une durée prédéterminée en l'absence de pulvérisation de fluide. Dans cette hypothèse, les saletés peuvent être évacuées par centrifugation.

Selon une possibilité, le fluide peut être pulvérisé sur les brosses pendant une fraction de cycle comportant de 2 à 100 tours desdites brosses. Plus précisément, ladite fraction de cycle compte une entre 8 et 30 tours. Comme mentionné auparavant, la moitié des tours s'effectue dans un sens, l'autre moitié s'effectuant en sens inverse. Si les rouleaux tournent à 60 tours par minute, une fraction de cycle dure une dizaine de secondes dans l'hypothèse d'une dizaine de tours.

Ce cycle de rotation est alors réalisé par exemple entre deux lavages de véhicules. Un tel cycle de nettoyage des brosses peut par exemple être enclenché automatiquement au début ou à la fin d'un cycle de lavage de véhicule. Alternativement, il peut être enclenché manuellement, au gré de l'utilisateur ou du gestionnaire des stations de lavage de véhicules.

Selon encore une autre possibilité, le cycle de nettoyage des brosses peut être enclenché automatiquement lorsqu'au moins une condition prédéterminée quantifiable par l'unité de gestion du nettoyage est satisfaite. Il peut s'agir d'une période d'inactivité de la station de lavage, lorsqu'aucun cycle n'a été effectué pendant une période prédéterminée, par exemple du fait du gel ou d'une inactivité prolongé en cas de travaux, fermeture du site etc..

Dans ce cas, ledit cycle de nettoyage peut durer entre 40 s et 80 s, c'est à dire sensiblement plus longtemps que dans le cas normal d'un cycle prenant place entre deux phases de lavage de véhicule.

Selon un mode de fonctionnement possible, chaque cycle de nettoyage des brosses est couplé à la fermeture des moyens de carterisation des brosses, et enclenché lorsque lesdits moyens de carterisation sont en position fermée.

La pulvérisation de liquide, dans le cadre du procédé, peut se faire selon une orientation qui est variable, c'est-à-dire que, au cours du nettoyage, l'orientation du ou des jets de nettoyage peut être modifiée pour optimiser l'efficacité dudit nettoyage, la modification de l'orientation pouvant être pilotée par un utilisateur via l'unité de gestion.

L'invention va à présent être décrite plus en détail, en référence aux figures disposées en annexe, pour lesquelles :
- la figure 1 représente, en vue perspective, une possibilité de dispositif de nettoyage selon l'invention ; et
- la figure 2 montre, également en vue perspective, une alternative de mise en oeuvre du dispositif de l'invention.

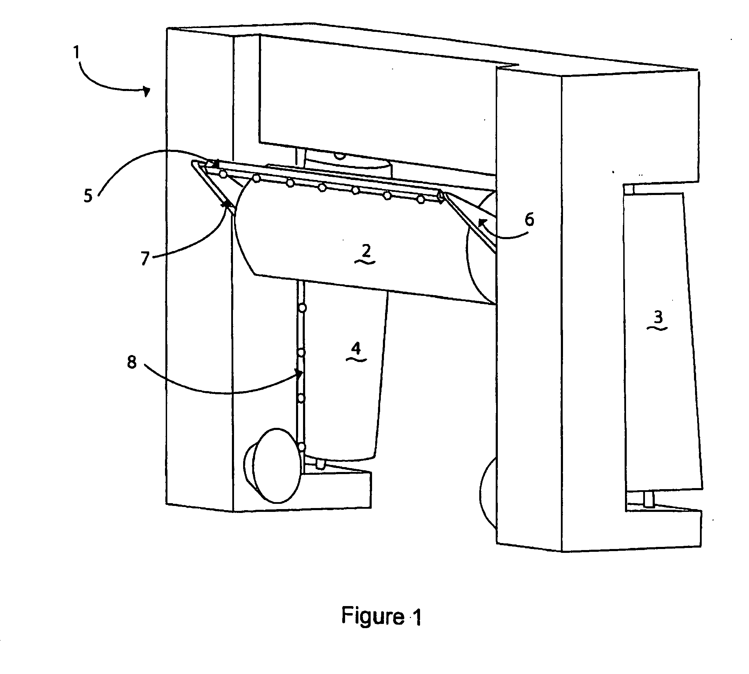

En référence à la figure 1, le portique (1) comporte des brosses en forme de rouleaux rotatifs. Un premier rouleau (2) d'allure horizontale est associé à des rouleaux (3, 4) orientés sensiblement verticalement, l'ensemble étant destiné à nettoyer les surfaces supérieures et les côtés latéraux des véhicules. Ces portiques (1), de manière classique, se déplacent en translation rectiligne relativement au véhicule à nettoyer (non représenté).

Selon l'invention, une première rampe de buses (5) est disposée en regard du rouleau horizontal (2). Cette rampe (5) comporte une succession de buses projetant du fluide à moyenne ou haute pression (jusqu'à 120 bars) à destination de la brosse (2). La rampe (5), montée sur des supports (6, 7) fixés au portique (1), est rotative selon un axe, ce qui permet d'affiner l'orientation des buses par rapport aux rouleaux (2), puisqu'elles peuvent alors être orientées tangentiellement, radialement, ou encore selon une position intermédiaire. Leur orientation peut également varier au cours de la phase de nettoyage du rouleau (2).

Des rampes équivalentes sont prévues pour le nettoyage des rouleaux d'allure verticale (3, 4). Seule la rampe (8) s'appliquant au rouleau (4) est en fait visible sur la figure 1. Elle est rotative selon un axe d'allure verticale, de manière à pouvoir orienter les buses qu'elle contient relativement au rouleau de brossage (4) vertical. De la même manière qu'auparavant, cette orientation peut aller d'une direction tangentielle à une direction radiale ou normale en passant par des positions intermédiaires.

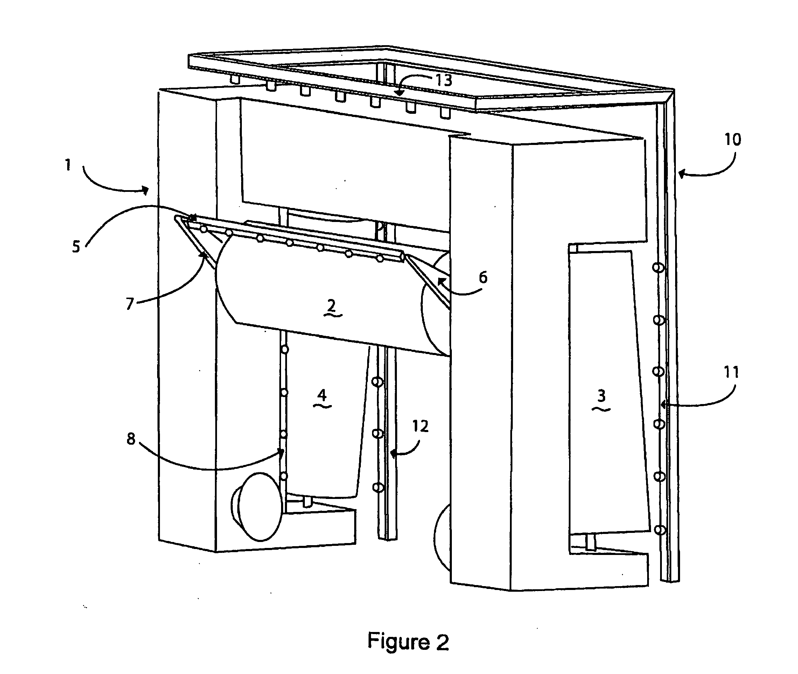

La variante de la figure 2 montre un portique de nettoyage (10) distinct du portique de lavage de véhicules (1), fixe ou mobile, et qui comporte sur ses montants latéraux (11, 12) des buses orientées en regard des rouleaux d'allure verticale (3, 4). Une rampe (13) est par ailleurs disposée en partie supérieure du portique (10), en regard du rouleau supérieur horizontal (2). Il est à noter que, dans l'hypothèse représentée en figure 2, la rampe supérieure (13) vient en complément de la rampe (5) telle que déjà représentée dans la configuration de la figure 1.

Dans cette variante de la figure 2, les rampes de buses représentées ont pour fonction exclusive le nettoyage des rouleaux (2, 3, 4). Dans l'hypothèse de la figure 1, les rampes latérales (8) peuvent également être mises en oeuvre pour le lavage à haute pression du véhicule.

Comme déjà mentionné, le lavage des rouleaux (2, 3, 4) peut intervenir soit entre deux opérations de lavage successives de véhicules, soit pendant des phases intermédiaires, avant ou après le lavage proprement dit (pendant le séchage, etc.).

Les exemples représentés en figures 1 et 2 ne sont bien entendu pas exhaustifs de l'invention. Celle-ci englobe d'autres variantes, par exemple de forme, de configuration ou de positionnement des portiques, rampes de buses, etc.

## Revendications

1. Procédé de nettoyage des brosses en forme de rouleaux rotatifs (2, 3, 4) d'un portique de lavage (1) de véhicules à l'aide d'un dispositif de nettoyage comportant des buses pulvérisent a un fluide sous pression comprise entre 15 et 75 bars sur les brosses mises en rotation pour leur nettoyage, **caractérisé en ce qu'**un cycle de nettoyage des brosses est enclenché automatiquement au début ou à la fin d'un cycle de lavage de véhicule et **en ce qu'**au cours d'un cycle de nettoyage des brosses,
- celles-ci sont mises en rotation alternativement dans un sens et en sens inverse ;
- les rouleaux (2, 3, 4) sont immobilisés pendant une durée prédéterminée entre chaque changement de sens de rotation ;
- la durée de la rotation dans chaque sens est comprise entre 3 s et 10 s.

2. Procédé de nettoyage selon la revendication 1, **caractérisé en ce que** la durée de la rotation dans chaque sens est égale à 5 s.

3. Procédé de nettoyage selon l'une des revendications 1 et 2, **caractérisé en ce qu'**à certains moments d'un cycle de nettoyage des brosses, les rouleaux (2, 3, 4) sont entrainés en rotation pendant une durée prédéterminée en l'absence de pulvérisation de fluide

4. Procédé de nettoyage selon l'une des revendications 1 à 3, **caractérisé en ce que** le fluide est pulvérisé sur les brosses pendant une fraction de cycle comportant 2 à 100 tours desdites brosses.

5. Procédé de nettoyage selon la revendication précédente, **caractérisé en ce que** ladite fraction de cycle compte entre 8 et 30 tours.

6. Procédé de nettoyage selon l'une des revendications 1 à 5, **caractérisé en ce que** le cycle de nettoyage des brosses est enclenché à la fin d'un cycle de lavage de véhicule.

7. Procédé de nettoyage selon l'une des revendications 1 à 6, **caractérisé en ce qu'**un cycle de nettoyage des brosses est enclenché automatiquement lorsqu'au moins une condition prédéterminée quantifiable par une unité de gestion du nettoyage est satisfaite.

8. Procédé de nettoyage selon la revendication précédente, **caractérisé en ce qu'**un cycle de nettoyage des brosses est enclenché automatiquement lorsqu'aucun cycle de lavage de véhicule n'a été effectué pendant une période prédéterminée.

9. Procédé de nettoyage selon l'une des revendications 7 et 8, **caractérisé en ce que** ledit cycle de nettoyage dure entre 40 s et 80 s.

10. Procédé de nettoyage selon l'une quelconque des revendications précédentes, **caractérisé en ce que** chaque cycle de nettoyage des brosses est couplé à la fermeture des moyens de carterisation des brosses, et enclenché lorsque lesdits moyens de carterisation sont en position fermée.

11. Procédé de nettoyage selon l'une quelconque des revendications précédentes, **caractérisé en ce que** le fluide est pulvérisé sur les brosses selon une orientation variable.

12. Dispositif de nettoyage des brosses d'un portique (1) de lavage de véhicules conformément à un procédé selon les revendications précédentes, **caractérisé en ce qu'**il comporte des moyens d'orientation des buses relativement aux brosses.

13. Dispositif de nettoyage des brosses d'un portique (1) de lavage de véhicules selon la revendication précédente, **caractérisé en ce que** les moyens d'orientation sont réglables en vue de faire varier la position relative des buses et des brosses.

14. Dispositif de nettoyage des brosses d'un portique (1) de lavage de véhicules selon l'une des revendications 12 et 13, **caractérisé en ce que** les buses sont montées sur le portique de lavage de véhicules.

15. Dispositif de nettoyage des brosses d'un portique (1) de lavage de véhicules selon l'une des revendications 12 et 13, **caractérisé en ce que** les buses sont montées sur un portique (10) distinct du portique (1) de lavage de véhicules.

16. Dispositif de nettoyage des brosses d'un portique (1) de lavage de véhicules selon l'une quelconque des revendications 12 à 15, **caractérisé en ce que** les buses sont intégrées à au moins une rampe (5, 8 ; 11, 12, 13).

17. Dispositif de nettoyage des brosses d'un portique (1) de lavage de véhicules selon la revendication précédente, **caractérisé en ce que** la ou les rampes (5, 8 ; 11, 12, 13) sont orientables.

18. Dispositif de nettoyage des brosses d'un portique (1) de lavage de véhicules selon l'une quelconque des revendications 12 à 17, **caractérisé en ce qu'**il comporte une unité de gestion apte à déclencher un cycle de lavage des brosses sur la base d'une commande automatisée, celle-ci étant gérée par l'unité de gestion sur la base d'événements prédéterminés mémorisés.

19. Dispositif de nettoyage des brosses d'un portique (1) de lavage de véhicules selon l'une des revendications, **caractérisé en ce qu'**il comporte des moyens d'action mécaniques sur les brosses en vue d'en détacher les salissures.

20. Dispositif de nettoyage des brosses d'un portique (1) de lavage de véhicules selon la revendication précédente, **caractérisé en ce que** lesdits moyens consistent pour chaque brosse en un peigne à longrine d'allure parallèle à la brosse et dont les dents souples ou rigides sont aptes à interférer avec la brosse en mouvement.

21. Dispositif de nettoyage des brosses d'un portique (1) de lavage de véhicules selon l'une quelconque des revendications 12 à 20, **caractérisé en ce qu'**il comporte des moyens de carterisation des brosses en cours de nettoyage.

22. Dispositif de nettoyage des brosses d'un portique (1) de lavage de véhicules selon la revendication précédente, **caractérisé en ce que** les moyens de carterisation sont mobiles entre deux positions stables, une position inactive et une position active de protection contre les projections au moment du lavage des brosses.

23. Dispositif de nettoyage des brosses d'un portique (1) de lavage de véhicules selon la revendication précédente, **caractérisé en ce que**, le portique de lavage comportant deux brosses latérales d'allure verticale et une brosse supérieure d'allure horizontale, les moyens de carterisation comportent pour chaque brosse verticale un carrossage latéral externe au contact duquel se rétracte en position inactive et à partir duquel se déploie en position active au moins un pan additionnel de carterisation s'étendant au moins partiellement autour de chaque brosse verticale.

24. Dispositif de nettoyage des brosses d'un portique (1) de lavage de véhicules selon la revendication précédente, **caractérisé en ce que** le carrossage latéral externe consiste en une tôle formant une portion de cylindre d'axe sensiblement égal à l'axe de rotation des rouleaux (3, 4) constituant les brosses, dans laquelle vient coulisser transversalement une portion de cylindre de même rayon de courbure constituant le pan additionnel.

25. Dispositif de nettoyage des brosses d'un portique (1) de lavage de véhicules selon la revendication précédente, **caractérisé en ce que** le pan additionnel comporte, s'étendant sensiblement radialement en direction de la brosse, un peigne ou au moins une lamelle, cette dernière ou les dents du peigne pénétrant dans le volume occupé par le rouleau (3, 4) et que ce dernier heurte lorsqu'il est en cours de rotation.

26. Dispositif de nettoyage des brosses d'un portique (1) de lavage de véhicules selon l'une des revendications 23 à 25, **caractérisé en ce que** les moyens de carterisation de la brosse supérieure horizontale consistent en un volet.

27. Dispositif de nettoyage des brosses d'un portique (1) de lavage de véhicules selon l'une des revendications 22 à 26, **caractérisé en ce que** le déplacement des moyens de carterisation est piloté par l'unité de traitement.

28. Dispositif de nettoyage des brosses d'un portique (1) de lavage de véhicules selon l'une quelconque des revendications 12 à 27, **caractérisé en ce que** le fluide projeté par les buses est un liquide.

29. Dispositif de nettoyage des brosses d'un portique (1) de lavage de véhicules selon la revendication précédente, **caractérisé en ce que** ledit liquide comporte des moyens chimiques de nettoyage des brosses.

30. Dispositif de nettoyage des brosses d'un portique (1) de lavage de véhicules selon l'une des revendications 28 et 29, **caractérisé en ce que** le liquide projeté est chaud.

31. Dispositif de nettoyage des brosses d'un portique (1) de lavage de véhicules selon l'une quelconque des revendications 12 à 27, **caractérisé en ce que** le fluide est de l'air.

## Claims

1. A method for cleaning brushes in the form of rotary rollers (2, 3, 4) of a roll-over car wash (1) for vehicles using a cleaning device comprising nozzles spraying pressurized fluid comprised between 15 and 75 bars on the brushes set in rotation for cleaning thereof, **characterized in that** a cleaning cycle of the brushes is triggered automatically at the beginning or end of a vehicle washing cycle, and **in that** during a brush cleaning cycle,
- said brushes are set in rotation alternatingly in one direction and the opposite direction;
- the rollers (2, 3, 4) are immobilized for a predetermined period of time between each change in the direction of rotation;
- the duration of rotation in each direction is comprised between 3 s and 10 s.

2. The cleaning method according to claim 1, **characterized in that** the duration of rotation in each direction is equal to 5 s.

3. The cleaning method according to one of claims 1 and 2, **characterized in that** at certain moments of a brush cleaning cycle, the rollers (2, 3, 4) are rotated for a predetermined period of time without spraying fluids.

4. The cleaning method according to one of claims 1 to 3, **characterized in that** the fluid is sprayed on the brushes during a fraction comprising 2 to 100 revolutions of said brushes.

5. The cleaning method according to the preceding claim, **characterized in that** said cycle fraction includes between 8 and 30 revolutions.

6. The cleaning method according to one of claims 1 to 5, **characterized in that** the brush cleaning cycle is triggered at the end of a vehicle washing cycle.

7. The cleaning method according to one of claims 1 to 6, **characterized in that** a brush cleaning cycle is triggered automatically when at least one predetermined condition quantifiable by a cleaning management unit is met.

8. The cleaning method according to the preceding claim, **characterized in that** a brush cleaning cycle is triggered automatically when a vehicle wash cycle has not been performed for a predetermined period of time.

9. The cleaning method according to one of claims 7 and 8, **characterized in that** said cleaning cycle last between 40 s and 80 s.

10. The cleaning method according to any one of the preceding claims, **characterized in that** each brush cleaning cycle is coupled to the closing of the casing means of the brushes, and triggered when said casing means are in the closed position.

11. The cleaning method according to any one of the preceding claims, **characterized in that** the fluid is sprayed on the brushes according to a variable orientation.

12. A device for cleaning brushes of a vehicle roll-over car wash (1) following a method according to the preceding claims, **characterized in that** it comprises means for orienting the nozzles relative to the brushes.

13. The device for cleaning brushes of a vehicle roll-over car wash (1) according to the preceding claim, **characterized in that** the orientation means can be adjusted so as to vary the relative positions of the nozzles and brushes.

14. The device for cleaning brushes of a vehicle roll-over car wash (1) according to one of claims 12 and 13, **characterized in that** the nozzles are mounted on the vehicle roll-over car wash.

15. The device for cleaning brushes of a vehicle roll-over car wash (1) according to one of claims 12 and 13, **characterized in that** the nozzles are mounted on a crossbar (10) separate from the crossbar (1) of the vehicle roll-over car wash.

16. The device for cleaning brushes of a vehicle roll-over car wash (1) according to one of claims 12 to 15, **characterized in that** the nozzles are incorporated into at least one ramp (5, 8; 11, 12, 13).

17. The device for cleaning brushes of a vehicle roll-over car wash (1) according to the preceding claim, **characterized in that** the ramp(s) (5, 8; 11, 12, 13) can be oriented.

18. The device for cleaning brushes of a vehicle roll-over car wash (1) according to any one of claims 12 to 17, **characterized in that** it comprises a management unit capable of triggering a brush wash cycle based on an automated command, the latter being managed by the management unit based on a predetermined stored event.

19. The device for cleaning brushes of a vehicle roll-over car wash (1) according to one of the claims, **characterized in that** it comprises mechanical action means acting on the brushes so as to detach dirt therefrom.

20. The device for cleaning brushes of a vehicle roll-over car wash (1) according to the preceding claim, **characterized in that** said means consist, for each brush, of a comb with its handle parallel to the brush and whereof the flexible or rigid teeth are capable of interfering with the brush in motion.

21. The device for cleaning brushes of a vehicle roll-over car wash (1) according to any one of claims 12 to 20, **characterized in that** it comprises casing means for the brushes during cleaning.

22. The device for cleaning brushes of a vehicle roll-over car wash (1) according to the preceding claim, **characterized in that** the casing means can move between two stable positions, an inactive position and an active position protecting against projections during washing of the brushes.

23. The device for cleaning brushes of a vehicle roll-over car wash (1) according to the preceding claim, **characterized in that**, the vehicle roll-over car wash comprising two vertical lateral brushes and one upper horizontal brush, the casing means comprise, for each vertical brush, and outer lateral camber in contact with which at least one additional casing face extending at least partially around each vertical brush retracts into the inactive position and from which the latter deploys into the active position.

24. The device for cleaning brushes of a vehicle roll-over car wash (1) according to the preceding claim, **characterized in that** the outer lateral camber consists of a sheet of metal forming a cylinder portion with an axis substantially equal to the axis of rotation of the rollers (3, 4) making up the brushes, in which a cylinder portion with the same curve radius making up the additional face slides transversely.

25. The device for cleaning brushes of a vehicle roll-over car wash (1) according to the preceding claim, **characterized in that** the additional face comprises, extending substantially radially toward the brush, a comb or at least one blade, the latter or the teeth of the comb penetrating the volume occupied by the roller (3, 4) and which the latter collides with when it is rotating.

26. The device for cleaning brushes of a vehicle roll-over car wash (1) according to one of claims 23 to 25, **characterized in that** the casing means of the horizontal upper brush consists of a flap.

27. The device for cleaning brushes of a vehicle roll-over car wash (1) according to one of claims 22 to 26, **characterized in that** the movement of the casing means is steered by the processing unit.

28. The device for cleaning brushes of a vehicle roll-over car wash (1) according to any one of claims 12 to 27, **characterized in that** the fluid projected by the nozzles is a liquid.

29. The device for cleaning brushes of a vehicle roll-over car wash (1) according to the preceding claim, **characterized in that** said liquid comprises chemical means for cleaning the brushes.

30. The device for cleaning brushes of a vehicle roll-over car wash (1) according to one of claims 28 and 29, **characterized in that** the projected liquid is hot.

31. The device for cleaning brushes of a vehicle roll-over car wash (1) according to any one of claims 12 to 27, **characterized in that** the fluid is air.

## Patentansprüche

1. Reinigungsverfahren der Bürsten in Form drehender Rollen (2, 3, 4) einer Portalwaschanlage (1) für Fahrzeuge mit Hilfe einer Reinigungsvorrichtung, die Düsen aufweist, die ein Fluid unter Druck zwischen 15 und 75 bar inklusive auf die für ihre Reinigung in Rotation versetzte Bürsten sprühen, **dadurch gekennzeichnet**, das ein Reinigungszyklus der Bürsten automatisch am Anfang oder am Ende eines Waschzyklus eines Fahrzeugs ausgelöst wird und dass während eines Reinigungszyklus der Bürsten
- diese abwechselnd in eine Richtung und in entgegengesetzte Richtung in Rotation versetzt werden,
- die Rollen (2, 3, 4) während einer vorbestimmten Dauer zwischen jeder Änderung der Drehrichtung angehalten werden,
- die Dauer der Rotation in jede Richtung zwischen 3 s und 10 s inklusive ist.

2. Reinigungsverfahren nach Anspruch 1, **dadurch gekennzeichnet, dass** die Dauer der Rotation in jede Richtung gleich 5 s beträgt.

3. Reinigungsverfahren nach einem der Ansprüche 1 und 2, **dadurch gekennzeichnet, dass** die Rollen (2, 3, 4) zu bestimmten Augenblicken eines Reinigungszyklus der Bürsten während einer vorbestimmten Dauer in Abwesenheit von Versprühen von Fluid rotierend angetrieben werden.

4. Reinigungsverfahren nach einem der Ansprüche 1 bis 3, **dadurch gekennzeichnet, dass** das Fluid während eines Zyklusbruchteils, der 2 bis 100 Umdrehungen der Bürsten umfasst, auf die Bürsten gesprüht wird.

5. Reinigungsverfahren nach vorangehendem Anspruch, **dadurch gekennzeichnet, dass** der Zyklusbruchteil zwischen 8 und 30 Umdrehungen zählt.

6. Reinigungsverfahren nach einem der Ansprüche 1 bis 5, **dadurch gekennzeichnet, dass** das Versprühen am Ende des Waschzyklus des Fahrzeugs ausgelöst wird.

7. Reinigungsverfahren nach einem der Ansprüche 1 bis 6, **dadurch gekennzeichnet, dass** ein Reinigungszyklus der Bürsten automatisch ausgelöst wird, wenn mindestens eine vorbestimmte Bedingung, die durch eine Verwaltungseinheit der Reinigung quantifizierbar ist, erfüllt ist.

8. Reinigungsverfahren nach vorangehendem Anspruch, **dadurch gekennzeichnet, dass** ein Reinigungszyklus der Bürsten automatisch ausgelöst wird, wenn während eines vorbestimmten Zeitraums kein Waschzyklus eines Fahrzeugs durchgeführt wurde.

9. Reinigungsverfahren nach einem der Ansprüche 7 und 8, **dadurch gekennzeichnet, dass** der Reinigungszyklus zwischen 40 s und 80 s dauert.

10. Reinigungsverfahren nach einem der vorangehenden Ansprüche, **dadurch gekennzeichnet, dass** jeder Reinigungszyklus der Bürsten mit dem Schließen der Kabinenmittel der Bürsten gekoppelt ist und ausgelöst wird, wenn die Kabinenmittel in geschlossener Stellung sind.

11. Reinigungsverfahren nach einem der vorhergehenden Ansprüche, **dadurch gekennzeichnet, dass** das Fluid auf die Bürsten gemäß einer variablen Richtung gesprüht wird.

12. Reinigungsvorrichtung der Bürsten einer Portalwaschanlage (1) für Fahrzeuge nach einem Verfahren nach den vorangehenden Ansprüchen, **dadurch gekennzeichnet, dass** sie Ausrichtungsmittel der Bürsten relativ zu den Bürsten aufweist.

13. Reinigungsvorrichtung der Bürsten einer Portalwaschanlage (1) für Fahrzeuge nach vorangehendem Anspruch, **dadurch gekennzeichnet, dass** die Ausrichtungsmittel im Hinblick auf die Änderung der relativen Position der Düsen und der Bürsten einstellbar sind.

14. Reinigungsvorrichtung der Bürsten einer Portalwaschanlage (1) für Fahrzeuge nach einem der Ansprüche 12 und 13, **dadurch gekennzeichnet, dass** die Düsen auf der Portalwaschanlage für Fahrzeuge montiert ist.

15. Reinigungsvorrichtung der Bürsten einer Portalwaschanlage (1) für Fahrzeuge nach einem der Ansprüche 12 und 13, **dadurch gekennzeichnet, dass** die Düsen auf einer Portalanlage (10) montiert sind, die sich von der Portalwaschanlage (1) für Fahrzeuge unterscheidet.

16. Reinigungsvorrichtung der Bürsten einer Portalwaschanlage (1) für Fahrzeuge nach einem der Ansprüche 12 bis 15, **dadurch gekennzeichnet, dass** die Düsen in mindestens eine Schiene (5, 8; 11, 12, 13) integriert sind.

17. Reinigungsvorrichtung der Bürsten einer Portalwaschanlage (1) für Fahrzeuge nach vorangehendem Anspruch, **dadurch gekennzeichnet, dass** die Schiene(n) (5, 8; 11, 12, 13) bewegbar sind.

18. Reinigungsvorrichtung der Bürsten einer Portalwaschanlage (1) für Fahrzeuge nach einem der Ansprüche 12 bis 17, **dadurch gekennzeichnet, dass** sie eine Verwaltungseinheit aufweist, die imstande ist, einen Waschzyklus der Bürsten auf der Basis eines automatisierten Befehls auszulösen, wobei dieser von der Verwaltungseinheit auf der Basis gespeicherter vorbestimmter Ereignisse verwaltet wird.

19. Reinigungsvorrichtung der Bürsten einer Portalwaschanlage (1) für Fahrzeuge nach einem der Ansprüche, **dadurch gekennzeichnet, dass** sie mechanische Aktionsmittel auf die Bürsten im Hinblick auf das Lösen von Verschmutzungen aufweist.

20. Reinigungsvorrichtung der Bürsten einer Portalwaschanlage (1) für Fahrzeuge nach vorangehendem Anspruch, **dadurch gekennzeichnet, dass** die Mittel für jede Bürste aus einem Kamm mit zu der Bürste parallelem Längsträger bestehen, dessen elastische oder starre Zinken imstande sind, in die Bürste in Bewegung einzugreifen.

21. Reinigungsvorrichtung der Bürsten einer Portalwaschanlage (1) für Fahrzeuge nach einem der Ansprüche 12 bis 20, **dadurch gekennzeichnet, dass** sie Kabinenmittel der Bürsten während der Reinigung aufweist.

22. Reinigungsvorrichtung der Bürsten einer Portalwaschanlage (1) für Fahrzeuge nach vorangehendem Anspruch, **dadurch gekennzeichnet, dass** die Kabinenmittel zwischen zwei stabilen Stellungen, einer inaktiven Stellung und einer aktiven Stellung des Schutzes vor Spritzern im Augenblick des Waschens der Bürsten, bewegbar sind.

23. Reinigungsvorrichtung der Bürsten einer Portalwaschanlage (1) für Fahrzeuge nach vorangehendem Anspruch, **dadurch gekennzeichnet, dass**, wobei die Portalwaschanlage zwei seitliche senkrechte Bürsten und eine obere waagerechte Bürste aufweist, die Kabinenmittel für jede senkrechte Bürste eine äußere seitliche Verkleidung aufweisen, bei deren Kontakt sich mindestens ein zusätzlicher Kabinenriegel, der sich mindestens teilweise um jede vertikale Bürste erstreckt, in inaktiver Stellung einfaltet und in aktiver Stellung entfaltet.

24. Reinigungsvorrichtung der Bürsten einer Portalwaschanlage (1) für Fahrzeuge nach vorangehendem Anspruch, **dadurch gekennzeichnet, dass** die seitliche Verkleidung aus einem Blech besteht, das einen Zylinderabschnitt bildet mit einer Achse, die etwa der Rotationsachse der Rollen (3, 4) entspricht, die die Bürsten bilden, in den quer ein Zylinderabschnitt mit dem gleichen Krümmungsradius gleitet, der den zusätzlichen Riegel bildet.

25. Reinigungsvorrichtung der Bürsten einer Portalwaschanlage (1) für Fahrzeuge nach vorangehendem Anspruch, **dadurch gekennzeichnet, dass** der zusätzliche Riegel, wenn er sich etwa radial in Richtung der Bürste erstreckt, einen Kamm oder mindestens eine Lamelle aufweist, wobei diese Letztgenannte oder die Zinken des Kamms in das Volumen eindringen, das von der Rolle (3, 4) besetzt ist und dass dieser anschlägt, wenn sie sich dreht.

26. Reinigungsvorrichtung der Bürsten einer Portalwaschanlage (1) für Fahrzeuge nach einem der Ansprüche 23 bis 25, **dadurch gekennzeichnet, dass** die Kabinenmittel der oberen waagerechten Bürste aus einem Flügel bestehen.

27. Reinigungsvorrichtung der Bürsten einer Portalwaschanlage (1) für Fahrzeuge nach einem der Ansprüche 22 bis 26, **dadurch gekennzeichnet, dass** die Verschiebung der Kabinenmittel von der Verarbeitungseinheit gesteuert wird.

28. Reinigungsvorrichtung der Bürsten einer Portalwaschanlage (1) für Fahrzeuge nach einem der Ansprüche 12 bis 27, **dadurch gekennzeichnet, dass** das von den Düsen versprühte Fluid eine Flüssigkeit ist.

29. Reinigungsvorrichtung der Bürsten einer Portalwaschanlage (1) für Fahrzeuge nach vorangehendem Anspruch, **dadurch gekennzeichnet, dass** die Flüssigkeit chemische Reinigungsmittel der Bürsten aufweist.

30. Reinigungsvorrichtung der Bürsten einer Portalwaschanlage (1) für Fahrzeuge nach einem der Ansprüche 28 et 29, **dadurch gekennzeichnet, dass** die versprühte Flüssigkeit warm ist.

31. Reinigungsvorrichtung der Bürsten einer Portalwaschanlage (1) für Fahrzeuge nach einem der Ansprüche 12 bis 27, **dadurch gekennzeichnet, dass** das Fluid Luft ist.
